(19) Europäisches Patentamt
European Patent Office
Office européen des brevets

(11) **EP 3 548 852 B1**

(12) **EUROPÄISCHE PATENTSCHRIFT**

(45) Veröffentlichungstag und Bekanntmachung des Hinweises auf die Patenterteilung:
**22.05.2024   Patentblatt 2024/21**

(21) Anmeldenummer: **17812077.0**

(22) Anmeldetag: **24.11.2017**

(51) Internationale Patentklassifikation (IPC):
***G01G 19/02*** *(2006.01)*

(52) Gemeinsame Patentklassifikation (CPC):
**G01G 19/022**

(86) Internationale Anmeldenummer:
**PCT/IB2017/057396**

(87) Internationale Veröffentlichungsnummer:
**WO 2018/100475 (07.06.2018 Gazette 2018/23)**

(54) **VERFAHREN UND VORRICHTUNG ZUM ERFASSEN DES GEWICHTS EINER SICH ÜBER EINE WAAGE BEWEGENDEN LAST**

METHOD AND DEVICE FOR DETECTING THE WEIGHT OF A LOAD MOVING ON SCALES

PROCÉDÉ ET DISPOSITIF DE DÉTECTION DU POIDS D'UNE CHARGE SE DÉPLAÇANT SUR UNE BALANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2016   CH 15662016**

(43) Veröffentlichungstag der Anmeldung:
**09.10.2019   Patentblatt 2019/41**

(73) Patentinhaber: **DIGI SENS Holding AG**
**3280 Murten (CH)**

(72) Erfinder:
- **LUSTENBERGER, Martin**
 **1752 Villars sur Glâne (CH)**
- **STUKER, Olivier**
 **3270 Aarberg (CH)**

(74) Vertreter: **Stump, Beat**
**Stump & Partner AG**
**Zimmergasse 16**
**8008 Zürich (CH)**

(56) Entgegenhaltungen:
**WO-A1-01/22044      WO-A1-2013/063710**
**US-A- 5 338 901      US-A- 5 998 741**

EP 3 548 852 B1

**Beschreibung**

Die vorliegende Erfindung betrifft ein Verfahren und eine Vorrichtung gemäss dem Oberbegriff der Ansprüche 1, 6 und 15.

Waagen der genannten Art werden vor unter Anderem in der Industrie und auch im Verkehr verwendet, dort, um das Gewicht von Motorfahrzeugen bei der Durchfahrt, beispielsweise bei Zahlstationen oder bei Kontrollen zu erfassen. Dabei ist es wünschenswert, möglichst hohe Geschwindigkeiten zuzulassen, beispielsweise oberhalb 50 km/h. Bekannt sind Waagen, welche mit einer Länge im Bereich eines Meters oder mehr das Gewicht eines einzelnen Rades oder, bei entsprechender Breite, das Gewicht einer Achse erfassen, wobei dann die Gewichte der Räder bzw. der Achsen eines Fahrzeugs aufsummiert und so das Gewicht des Fahrzeugs erhalten wird.

Dabei ist neben den grossen Abmessungen solcher Waagen auch die Genauigkeit des erfassten Gewichts problematisch, insbesondere, wenn das Fahrzeug nicht auf der Waage steht, sondern über diese fährt. Auch wenn die Waage das zu messende Gewicht über Deformationssensoren wie Lastzellen erfasst, sind Schwingungen bzw. Bewegungen der Mechanik kaum vermeidbar, so z.B. wenn das Rad auf die Trägerplatte der Waage aufläuft oder die durch das Reifenprofil gegebenen Profilklötze durch die Radumdrehung auf die Trägerplatte schlagen. Das von den Sensoren der Waage erzeugte Lastsignal wird dann durch Störungen überlagert, was die Genauigkeit der Messung mit steigender Geschwindigkeit erheblich beeinträchtigt.

Im Stand der Technik ist es deshalb bekannt, eine möglichst lange Trägerplatte vorzusehen, damit die Verweilzeit des Fahrzeugs auf der Waage erhöht und so das Lastsignal verlängert und damit gemittelt werden kann, was die Genauigkeit der Messung verbessert. Die Mittelung erfolgt beispielsweise mit dem Algorithmus

$$\frac{\int_{t_1}^{t_2} f(t)dt}{v} = G$$

wo f(t) das Lastsignal im Sinn der detektierten Gewichtskraft, t die Zeit und v die Geschwindigkeit des Fahrzeugs (bzw. der sich über die Waage bewegenden Last) bedeutet. Die Integration erfolgt, sobald das Lastsignal angestiegen ist ($t_1$) und endet, wenn das Lastsignal wieder abfällt ($t_2$), wobei die Qualität der Ausmittelung bzw. die Genauigkeit der Gewichtserfassung mit der Länge der Dauer des Lastsignals steigt, so dass in der Regel in Fahrtrichtung recht lange Waagen gebaut werden.

Nachteilig ist solchen Waagen, dass die Trägerplatte möglichst lang sein muss, um eine akzeptable Genauigkeit der Gewichtsmessung zu erreichen, oder umgekehrt, dass die für die Wägung zugelassene Geschwindigkeit tief ist, so dass eine befriedigende Lösung (beispielsweise eine zugelassene Geschwindigkeit von 80 km/h bei einer Länge der Trägerplatte der Waage von weniger als einem Meter) nicht vorliegt. Zudem sind solche Waagen wegen der zusätzlich durch eine separate Station zu erfassenden Geschwindigkeit aufwendig, wobei die Geschwindigkeitsmessung dann Achse für Achse erfolgen muss, damit bei der jeweiligen Wägung einer Achse die zutreffende Geschwindigkeit bekannt ist. Sonst verliert die Gewichtserfassung wiederum wesentlich an Genauigkeit, so wenn etwa ein LKW im Bereich der Waage beschleunigt oder bremst, dabei dessen Geschwindigkeit aber nur einmal erfasst wird. Die Abstimmung der Geschwindigkeitsmessung auf den Moment, wo jede Achse sich auf der Trägerplatte befindet, ist wiederum aufwändig.

Aus dem Stand der Technik der Dokumente WO 2013/063710 A1, WO 01/22044 A1, US 5 998 741 A und US 5 338 901 A sind derartige Waagen bekannt.

Entsprechend ist es die Aufgabe der vorliegenden Erfindung, eine verbesserte Waage für die Erfassung des Gewichts einer sich über sie bewegenden Last zu schaffen.

Diese Aufgabe wird durch ein Verfahren mit den Merkmalen von Anspruch 1 oder durch eine

Waage mit den Merkmalen von Anspruch 6 bzw. durch eine Anordnung mit den Merkmalen von Anspruch 15 gelöst.

Dadurch, dass das Lastsignal in Form von Teillastsignalen erfasst und diese verarbeitet werden, kann die Geschwindigkeit der Last bzw. des Fahrzeugs im relevanten Moment bestimmt werden, nämlich im Moment der Gewichtserfassung des jeweiligen Rades bzw. der jeweiligen Achse. Zudem erlaubt die getrennte Erfassung von Teillastsignalen eine erheblich genauere Erfassung des Zeitpunkts, in welchem die Last auf die Waage einzufahren beginnt bzw. diese wieder vollständig verlassen hat was die Genauigkeit der Wägung verbessert und letztlich hohe Geschwindigkeiten der Last zulässt.

Dadurch, dass die Waage mehrere Wägeeinheiten aufweist, die vom Trägerelement überspannt werden, lassen sich Teillastsignale generieren, welche zur Erfassung der Geschwindigkeit der sich über die Waage bewegenden Last dienen und eine Berechnung der Last mit hoher Genauigkeit bei hoher Geschwindigkeit erlauben.

Dadurch, dass sich die Waagen gruppieren lassen, können Fahrstreifen für Motorfahrzeuge mit einer Anordnung zur Messung des Gewichts von über die Anordnung fahrenden Motorfahrzeugen versehen werden, welche die automatische Erfassung von Gewicht, Geschwindigkeit und auch Fahrtrichtung der Motorfahrzeuge erlaubt.

Über die gestellte Aufgabe hinaus sind erfindungsgemäss kompakte Waagen im Bereich von 30 cm Länge, 60 cm Breite und 4 cm Höhe realisierbar, die bei einer Geschwindigkeit von 80 km/h und einer Achslast von mehr als 10 t eine Messgenauigkeit von < 5% des aktuellen Gewichts ermöglichen.

Bevorzugte Ausführungsformen weisen die Merkmale der abhängigen Ansprüche auf.

Die Erfindung wird nachstehend anhand der Figuren noch etwas näher beschrieben.

Es zeigt:

Figur 1　　eine Ansicht einer erfindungsgemässen und einbaufertigen Waage,

Figur 2　　eine Ansicht auf die Waage von Figur 1 bei entfernter Trägerplatte,

Figur 3　　einen Schnitt durch die Waage von Figur 1,

Figur 4a　　einen Ausschnitt aus dem Schnitt durch die Waage 1 gemäss Figur 3, nämlich im Bereich der Lagerstellen 23 und 24,

Figur 4b　　einen Ausschnitt aus dem Schnitt durch die Waage 1 gemäss Figur 3, nämlich im Bereich der Lagerstellen 25 und 28, und

Figur 5　　ein Diagramm mit den Lastsignalen, generiert durch die Waage von Figur 1, die durch ein Rad überfahren wird.

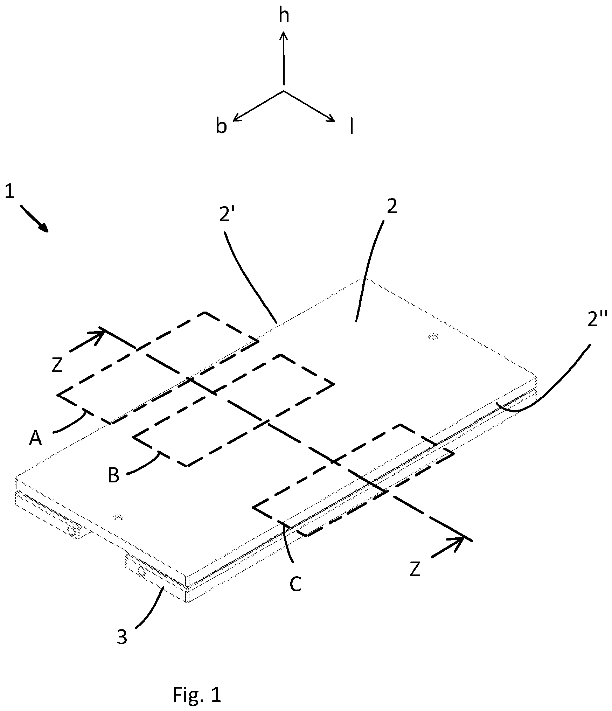

Figur 1 zeigt eine Ausführungsform der erfindungsgemässen Waage 1 mit einem als Trägerplatte 2 ausgebildeten Trägerelement für die Aufnahme der Last und einer Basisplatte 3, welche beispielsweise in den Belag einer Fahrbahn oder auch in eine beliebige andere Förderbahn z.B. in der Industrie eingelassen werden kann, derart, dass die Oberfläche der Trägerplatte 2 die Fahrbahnoberfläche bzw. die Oberfläche der Förderbahn fortsetzt, so dass z.B. ein in Längsrichtung (Richtung der Länge l) über die Waage fahrendes Fahrzeug bzw. eine über die Waage 1 bewegte Last durch die Trägerplatte 2 nicht gehindert oder gestört wird. In Fahrtrichtung (Richtung der Länge l) gesehen besitzt die Trägerplatte 2 eine vordere Kante 2' und eine hintere Kante 2".

Eingezeichnet sind weiter Aufstandsflächen A, B und C eines über die Trägerplatte 2 rollenden Reifens der hier in einen Strassenbelag eingelassenen Waage 1. Der Reifen selbst, beispielsweise der Reifen eines LKW, ist zur Entlastung der Figur weggelassen und rollt in Richtung der Länge l. Die Aufstandsfläche A zeigt den Moment, in welchem der Reifen sich noch auf dem umgebenden Strassenbelag befindet, aber gerade beginnt, auf die Trägerplatte 2 aufzulaufen, so dass deren vordere Kante 2' bereits durch die Gewichtskraft des Reifens belastet ist. Die Aufstandsfläche B zeigt einen Moment, in welchem sich der Reifen vollständig (in einer allgemeinen Position) auf der Trägerplatte 2 befindet, während die Aufstandsfläche C einen Moment zeigt, in welchem der Reifen teilweise von der Trägerplatte 2 abgelaufen ist, sich über der hinteren Kante 2" befindet, also zum Teil noch auf der Trägerplatte 2 und zum Teil schon auf dem umgebenden Strassenbelag aufliegt und damit die Trägerplatte 2 nur teilweise durch die Gewichtskraft belastet.

Bei der in den Figuren gezeigten Ausführungsform bildet die Trägerplatte 2 einen Messabschnitt der Waage 1.

Die in der Figur dargestellte Ausführungsform der Waage 1 besitzt beispielsweise eine Länge l von 30 cm, eine Breite b von 60 cm und eine Höhe h von 4 cm, ist also etwa in vorbestehende Vertiefungen im Strassenbelag einsetzbar, wie sie heute für einfachste Waagen für die blosse Detektion der Vorbeifahrt einer Achse vorgesehen sind. Die Aufstandsflächen A, B und C mögen eine Länge von 10 cm und eine Breite im Bereich 30 cm aufweisen. Wiederum in Bezug auf zu wägende Fahrzeuge kann das über die Aufstandsfläche A, B und C übertragene Gewicht im Bereich von 100 kg (Motorrad) bis zu mehreren Tonnen (LKW) betragen. Es ergibt sich, dass eine erfindungsgemässe Waage bevorzugt eine Länge von 50 cm oder weniger und eine Breite von 100 cm oder weniger aufweist.

Natürlich können das Trägerelement bzw. die Basisplatte 3 einem anderen Einsatzzweck der Waage 1 angepasst werden.

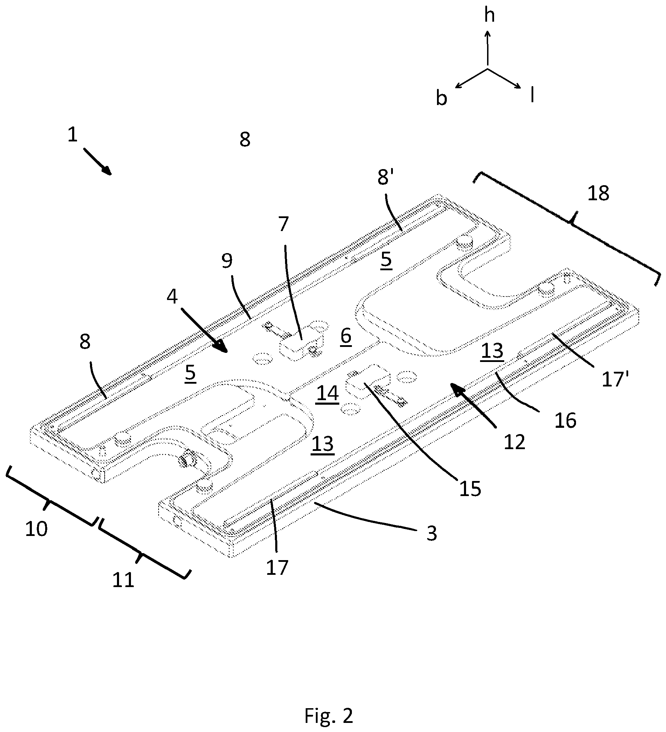

Figur 2 zeigt eine Ansicht auf die Waage 1 von Figur 1 bei entfernter Trägerplatte 2 (Figur 1), so dass die Basisplatte 3 von innen her mit den daran angeordneten Elementen sichtbar wird. Ersichtlich ist ein als T -förmigere Biegebalken 4 ausgebildetes Biegedeformationselement mit einem Querbalken 5 und einem Bein 6. Am Biegebalken 4 ist ein Deformationssensor 7 angeordnet, bevorzugt ein Schwingsaitensensor der KL Serie, wie er von der Anmelderin erhältlich ist.

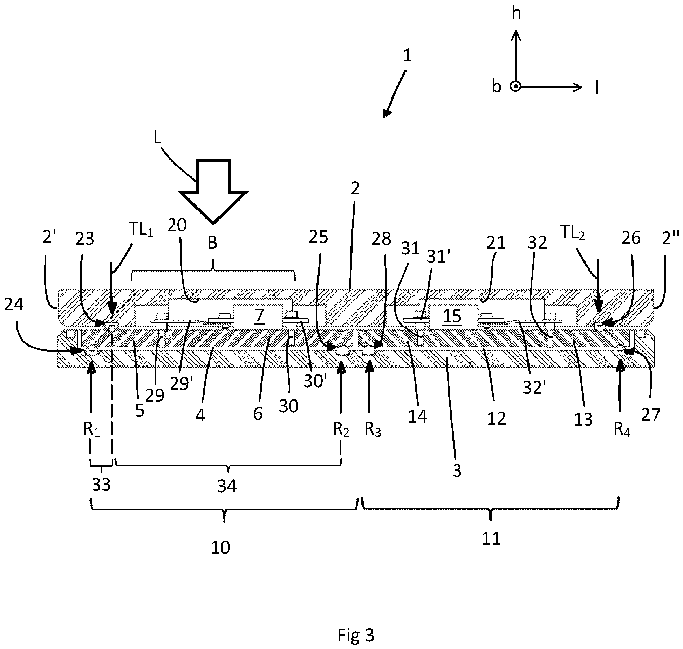

Auf dem Querbalken 5 ruhen Trägerleisten 8,8' in einer ersten Nut 9, auf denen wiederum, wenn montiert, die Trägerplatte 2 (Figur 1) betriebsfähig aufliegt. Der Querbalken 5 seinerseits ist auf der Basisplatte 3 - und damit am Untergrund - über die in der Figur 3 gezeigten Lager gelagert.

Die Anordnung mit dem Querbalken 5, seiner Lagerung (Figur 3), dem Deformationssensor 7 und den Trägerleisten 8,8' bildet eine Wägeeinheit 10.

Eine weitere Wägeeinheit 11 ist gleich ausgebildet wie die Wägeeinheit 10 und weist entsprechend ein als Biegebalken 12 ausgebildetes Biegedeformationselement mit einem Querbalken 13 und einem Bein 14 auf, ebenso einen Deformationssensor 15 sowie eine erste Nut 16 und darin angeordnete Trägerleisten 17,17'. Diese weitere, gemäss der in der Figur 2 gezeigten Ausführungsform zweite Wägeeinheit 11 befindet sich in Fahrtrichtung (Richtung der Länge l) gesehen hinter der ersten Wägeeinheit 10. Bei aufgelegtem Trägerelement, hier aufgelegter Trägerplatte 2, überspannt dieses die beiden Wägeeinheiten 10 und 11 und wirkt mit dem einen Ende, hier der vorderen Kante 2' (Figur 1) auf die Trägerleisten 8,8' und mit dem anderen Ende, hier der hinteren Kante 2" (Figur 1) auf die jeweiligen Trägerleisten 17,17' und damit auf den Biegebalken 4 bzw. 11.

Die beiden Wägeeinheiten 10,11 bilden eine an der Basisplatte angeordnete Wägeanordnung 18 der Waage 1. In weiteren in der Figur 2 dargestellten Ausnehmungen können Kabel zur Übermittlung der Lastsignale der Deformationssensoren und auch Stecker für die externe Übermittlung der Daten vorgesehen werden. Ein Rechner zur Auswertung der Lastsignale kann an der Basisplatte 3 oder extern vorgesehen werden, die diesbezügliche Auslegung kann durch den Fachmann im konkreten Fall erfolgen.

Es ergibt sich zusammenfassend gemäss der in der Figur 2 gezeigten Ausführungsform eine Waage 1 zur Berechnung des Gewichts einer sich über sie bewegenden Last mit einem Trägerelement und einer Wägeanordnung 18, wobei die Wägeanordnung 18 zwei Wägeeinheiten 10,11 und jede Wägeeinheit 10,11 ein Biegedeformationselement mit einem ein Lastsignal generierenden Deformationssensor 7,15 aufweist, und wobei die Wägeeinheiten 10,11 in Richtung der Bewegung der Last (Richtung l) hintereinander angeordnet sind, das Trägerelement diese überspannt und zur Übertragung von Gewichtskraft mit seinem einen Ende (hier die vordere Kante 2') auf das Deformationselement der ersten und seinem anderen Ende (hier die hintere Kante 2") auf das Deformationselement einer zweiten Wägeeinheit 11 wirkt.

Figur 3 zeigt einen Schnitt durch die erfindungsgemässe Waage 1 in der Ansicht ZZ von Figur 1. Ersichtlich sind die Trägerplatte 2, die Basisplatte 3 und die beiden Wägeeinheiten 10,11 mit ihren Biegebalken 4,12.

Die Deformationssensoren 7,15 der Wägeeinheiten 10,11 sind in je einer ihnen zugeordneten Ausnehmung 20,21 der Trägerplatte 2 angeordnet. Die Trägerplatte 2 selbst ist massiv gebaut, biegt sich selbst wenig durch und wird durch die vergleichsweise kleinen Ausnehmungen 20,21 kaum geschwächt. Die Basisplatte 3 ist auf dem Untergrund gelagert.

Jede Wägeeinheit 10,11 besitzt drei Lagerstellen 23 bis 25 und 26 bis 28, wobei die Lagerstellen 23 und 26 der Übertragung der Gewichtskraft der Last (hier: des Reifens) L von der Trägerplatte 2 auf die Biegebalken 4,12 dienen und die Lagerstellen 24,25 und 27,28 der Abstützung der durch die Gewichtskraft belasteten Biegebalken 4,12 auf der Basisplatte 3 und damit am Untergrund. Mit anderen Worten wirkt je eine Teillast $TL_1$ bzw. $TL_2$ auf den zugeordneten Biegebalken 4 bzw. 12 (die Teillasten $TL_1$ bzw. $TL_2$ ergeben in der Summe natürlich die Last L). Ebenso wirken die Reaktionskräfte $R_1$ bis $R_4$ der Basisplatte 3 auf den zugeordneten Biegebalken 4 bzw. 12.

Da die Lagerstellen 23,26 sich in der Horizontalen gesehen zwischen den Lagerstellen 24,25 bzw. 27,28 befinden, biegen sich die Biegebalken 4,12 bei Belastung der Trägerplatte 2 nach unten (gegen die Basisplatte 3 hin) durch, die Bolzen 29,30 bzw. 31,32 neigen sich mit ihrem oberen Ende gegen einander, so dass die Deformationssensoren 7,15 über die Hebel 29',30' bzw. 31',32' unter Druck gesetzt werden und je ein Deformationssignal $D_1$ bzw. $D_2$ generieren, welches wiederum der auf den jeweiligen Biegebalken 4,12 wirkenden

Teillast $TL_1$ bzw. $TL_2$ entspricht.

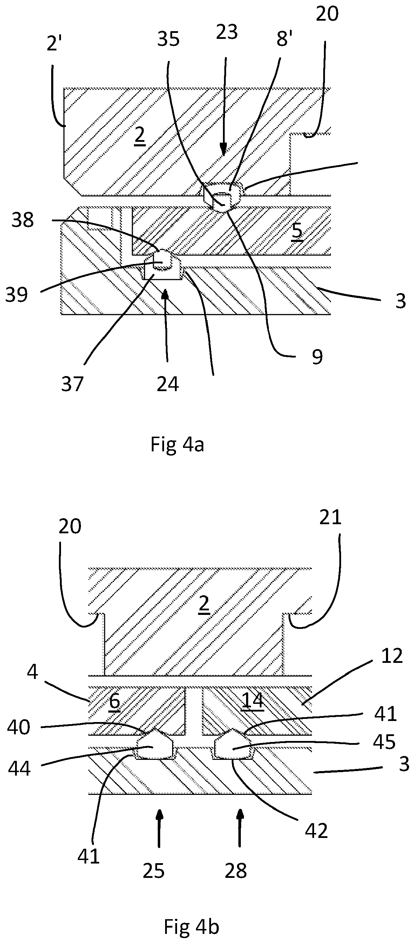

Die Lagerstellen 23 bis 28 sind in den Figuren 4a bis 4c näher dargestellt.

Wie erwähnt befindet sich in der Wägeeinheit 10 die Lagerstelle 23 zwischen den Lagerstellen 24 und 25, was zur definierten Durchbiegung des Biegebalkens 4 führt: vorliegend, d.h. bei der hier ausgewählten und dargestellten Ausführungsform der Erfindung, beträgt der horizontale Abstand 33 zwischen den Lagerstellen 23 und 24 ca. 10 mm, der Abstand 34 zwischen den Lagerstellen 23 und 25 ca. 120 mm, so dass sich betreffend der Durchbiegung des Biegebalkens 4 im Hinblick auf die wirkende Teillast $TL_1$ ein Übersetzungsverhältnis von ca. 1: 12 ergibt: die Durchbiegung ist gering, die Waage hart und damit geeignet für Lasten im Bereich von mehreren Tonnen. Wird der Ort der Lagerstelle 23 mehr gegen denjenigen der Lagerstelle 25 hin verschoben, erhöht sich die Durchbiegung bei gleicher Teillast $TL_1$, die Waage wird weicher, sie ist für geringere Lasten bei hoher Genauigkeit auch bei wenig sensitiven bzw. einfachen Deformationssensoren geeignet. Der Fachmann kann für den konkreten Fall die Ausbildung des Biegedeformationselements (hier der Biegebalken 4), den Ort der Lagerstellen (hier der Lagerstellen 23 bis 25) und die Ausbildung des Deformationssensors (hier der Schwingsaitensensor 7) festlegen. Insbesondere im Bereich der Deformationssensoren kommen auch Dehnmessstreifen etc. in Frage, je nach der gewünschten Auflösung in der Detektion der Durchbiegung des Biegedeformationselements. Dasselbe gilt auch für die Wägeeinheit 11.

Zusammenfassend ergibt sich, dass bevorzugt das Biegedeformationselement einen T - förmigen Umriss aufweist (Figur 2) und die Einwirkung der Gewichtskraft linienförmig über eine Länge des Querbalkens erfolgt (Figur 2, Trägerleisten 8,8' bzw. 17,17') und der Deformationssensor 7,15 eine Durchbiegung des Deformationselements 4,12 im Bereich seines Beins 6,14 detektiert. Das Biegedeformationselement kann auch einen anderen, geeigneten Umriss aufweisen, der in Verbindung mit einem Deformationssensor zur für diesen geeigneten Deformation im Lastfall führt.

Weiter ergibt sich, dass bevorzugt das Trägerelement als Trägerplatte 2 ausgebildet ist und das Biegedeformationselement einer Wägeeinheit 10,11 im Wesentlichen parallel zur Trägerplatte 2 verläuft, und an seinen in Richtung der Bewegung der Last (Richtung der Länge l) gegenüberliegenden Enden am Untergrund gelagert ist, und wobei die Einwirkung von Gewichtskraft (hier die Teillast $TL_1$ bzw. $TL_2$) zwischen Lagern (hier zwischen den Lagerstellen 24,25 bzw. 27,28), bevorzugt benachbart zu einem der Lager erfolgt, derart, dass sich das Deformationselement unter der Einwirkung von Gewichtskraft durchbiegt.

Dabei sind bevorzugt die erste und die zweite Wägeeinheit 10,11 derart angeordnet, dass deren Deformationselemente an einander angrenzen. Insbesondere sind gemäss der gezeigten Ausführungsform die beiden Wägeeinheiten 10,11 gleich ausgebildet, wobei die Beine 6,14 der beiden T-förmigen Biegebalken 4,12 gegeneinander gerichtet sind, oder, mit anderen Worten die Krafteinleitung der Trägerplatte bevorzugt im Bereich der voneinander abgewandten Enden der beiden Wägeeinheiten 10,11 erfolgt.

Figur 4a zeigt einen Ausschnitt aus dem Schnitt durch die Waage 1 gemäss Figur 3, nämlich im Bereich der Kante 2' mit den Lagerstellen 23 und 24.

Die Lagerstelle 23 weist die erste Nut 9 (Figur 2) im Biegebalken 4, eine Nut 35 in der Trägerplatte 2 sowie die in beiden Nuten liegende Trägerleiste 8' auf. Ein Begrenzungselement 36 verhindert, dass sich die Trägerleiste 8' in der Nut verschiebt, hier senkrecht zur Ebene der Figur 4a. Die in der Nut 35 aufliegende obere Seite der Trägerleiste 8' ist ballig, d.h. konvex ausgebildet, so dass eine leichte horizontale Querverschiebung zwischen der Trägerplatte 2 und dem Biegebalken 4 stattfinden kann, s. dazu die Beschreibung unten. Die Lagerstelle 23 ist als Pendellagerung ausgebildet.

Die Lagerstelle 24 weist eine Nut 37 im Basiselement 3, eine zweite Nut 38 im Biegebalken 4 sowie eine Trägerleiste 39 auf, die in beiden Nuten 37,38 aufliegt, wobei sowohl deren Unterseite als auch deren Oberseite gegengleich zur Nut 37 und 38 ausgebildet ist. Eine horizontale Querverschiebung zwischen der Basisplatte 3 und dem Biegebalken 4 ist unterbunden - die Lagerstelle 24 ist als Festlager ausgebildet. Die Trägerleiste 39 kann durchgehend, über die ganze Breite des Querbalkens 5 (Figur 2) oder geteilt sein, wie dies bei der Trägerleiste 8' der Fall ist. Dann ist wiederum eine Begrenzungselement 36 vorgesehen, welches die Trägerleiste 39 in der Nut 38 fixiert.

Die Lagerstellen 26,27 im Bereich der Kante 2" sind gleich ausgebildet wie die Lagerstellen 23 und 24.

Figur 4b zeigt einen Ausschnitt aus dem Schnitt durch die Waage 1 gemäss Figur 3, nämlich im Bereich der Lagerstellen 25 und 28. In einer dritten Nut 40 im Deformationsbalken 4 sowie einer dritten Nut 41 im Biegebalken 12 einerseits sowie in Nuten 41,42 in der Basisplatte 3 andererseits sind weitere Trägerleisten 44,45 eingelegt und derart ausgebildet, dass wie in den Lagerstellen 223,26 eine Pendellagerung vorhanden ist.

Die in den Figuren 4a und 4b gezeigte Anordnung ermöglicht die erfindungsgemässe Lastmessung über die Deformationssensoren 7,15 ohne oder praktisch ohne Hysterese. Biegt sich beispielsweise der Biegebalken durch die Teillast nach unten durch, wird der Abstand von der Lagerstelle 24 zur Lagerstelle 23 und insbesondere zur Lagerstelle 25 etwas kürzer, was bei nur Festlagern zu Verzerrungen im Biegebalken führen würde, welche das Messresultat beeinflussen und zu einer Hysterese führen. Zwar ist der Biegebalken 4,12 massiv ausgebildet und die bei der Biegung auftretenden Verschiebungen klein. Bei der notwendigen und auch möglichen Empfindlichkeit von als Deformationssensoren 7,15 be-vorzugt eingesetzten Schwingsaitensensoren würde ei-ne Lagerung ohne Pendellager jedoch zu fehlerhaften Messresultaten führen.

Es ergibt sich erfindungsgemäss und bevorzugt, dass das Deformationselement am Untergrund (hier über die Basisplatte 3) über ein Festlager 24,27 im Bereich der Einwirkung der Gewichtskraft und über ein Loslager 25,28 an seinem gegenüberliegenden Ende abgestützt ist, und wobei die Einwirkung der Gewichtskraft auf das Deformationselement über ein Pendellager 23, 26 erfolgt.

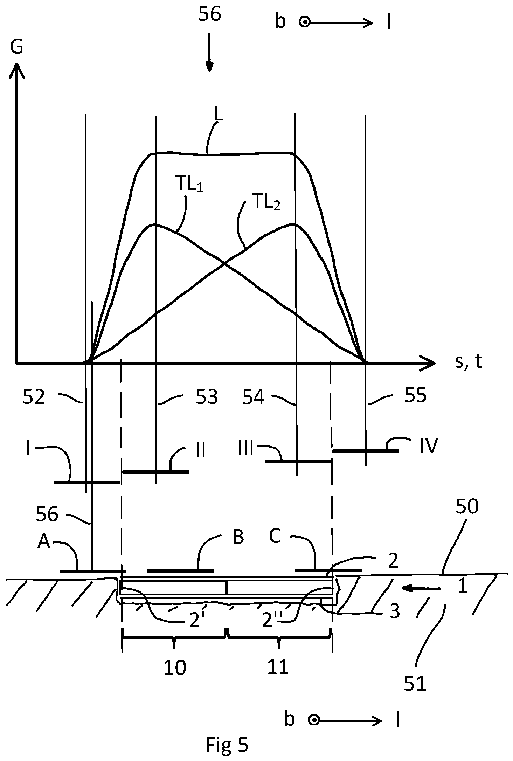

Figur 5 zeigt im unteren Teil eine Fahrbahnoberfläche 50 im Schnitt, mit einer anhand der Wägeeinheiten 10,11 sowie der Trägerplatte 2 und der Basisplatte 3 in der Art einer Strichzeichnung symbolisch dargestellten Waage 1 in der Ausführungsform gemäss den Figuren 2 bis 4b), die im Fahrbahnbelag eingelassen ist und so auf dem Untergrund 51 ruht. Dargestellt ist der Ort der Reifenauflageflächen A, B und C gemäss Figur 1.

Der besseren Übersichtlichkeit weiter oben dargestellt sind die Reifenauflageflächen I bis IV, eines über die Waage 1 fahrenden Fahrzeugs, die je eine spezielle Lage aufweisen, nämlich die

- Reifenauflagefläche I die in Fahrtrichtung gesehen (Richtung der Länge I) sich gerade unmittelbar vor der vorderen Kante 2' der Trägerplatte 2 befindet,
- dann die Reifenauflagefläche II, die sich unmittelbar hinter der vorderen Kante 2' befindet, so dass der Reifen sich vollständig auf der Trägerplatte 2 befindet,
- schliesslich die Reifenauflagefläche III, gerade vor der hinteren Kante 2", in einem Moment, wo der Reifen gerade noch vollständig auf der Trägerplatte 2 steht,
- und am Schluss die Reifenauflagefläche IV, wobei der Reifen die Trägerplatte 2 soeben ganz verlassen hat.

Diesen Reifenauflageflächen I bis IV ist der jeweilige Ort der Achse des zum Reifen gehörenden Rades zugeordnet, der natürlich in der Mitte der Reifenauflagefläche liegt, s. die vertikalen Linien 52 bis 55.

Die Linien 52 bis 55 laufen gegen oben, in ein Diagramm 56, welches in der horizontalen Achse den Strecke s in Fahrtrichtung, und, konstante Geschwindigkeit des zu messenden Fahrzeugs vorausgesetzt, auch die Zeit t zeigt. Auf der vertikalen Achse ist der rein qualitativ Betrag G der Lastsignale abgetragen, nämlich der Kurve des Teillastsignals $TL_1$ der Wägeeinheit 10 (Signal des Deformationssensors 7), der Kurve des Teillastsig-nals $TL_2$ der Wägeeinheit 11 (Signal des Deformationssensors 15), und der Kurve des Lastsignals L als Summe der Teillastsignale $TL_1$ und $TL_2$.

Aus dem Aufbau der Waage 1 folgt, dass die Teillastsignale $TL_1$ und $TL_2$ beim Überrollen der Waage 1 durch eine Last jeweils verschiedene Werte annehmen, mit der Ausnahme, wenn die Last genau in der Mitte des Trägerelements bzw. der Trägerplatte 2 steht.

Weiter folgt, dass das Teillastsignal $TL_1$ der Wä-geeinheit 10 minimal, d.h. Null ist, wenn der Reifen die Trägerplatte 2 noch nicht erreicht hat, s. die Reifenauflagefläche I und die Linie 52. Das Teillastsignal $TL_1$ erreicht ein Maximum, sobald der Reifen vollständig auf der Trägerplatte 2 steht, s. die Reifenauflagefläche II und die Linie 53. Danach fällt das Teillastsignal kontinuierlich ab, bis auf Null, sobald der Reifen die Waage 1 vollständig verlassen hat, s. die Reifenauflagefläche IV.

Gleich für das Teillastsignal $TL_2$, das anzusteigen beginnt, sobald das vordere Ende der Reifenauflagefläche die Waage 1 erreicht hat, s. beispielsweise die Reifenauflagefläche A mit der Linie 56, das nach kontinuierlichem Anstieg ein Maximum erreicht, sobald sich die Reifenauflagefläche gerade vor der hinteren Kante 2" der Trägerplatte 2 befindet, s. die Reifenauflagefläche III, und auf Null abfällt, sobald der Reifen die Waage 1 vollständig verlassen hat, s. die Reifenauflagefläche IV.

Das Diagramm zeigt, dass das Teillastsignal $TL_1$ stark ansteigt, während das Rad auf die Waage 1 aufläuft, und dann flach abfällt, bis das Rad von dieser vollständig abgelaufen ist, umgekehrt das Teillastsignal $TL_2$ flach ansteigt, während das Rad auf die Waage aufläuft und diese durchquert, und dann stark abfällt, sobald das Rad sich nur noch teilweise auf der Waage 1 befindet.

Das Diagramm zeigt nur ansatzweise die oben erwähnte Störung der Lastsignale $TL_1$, $TL_2$ durch die Dynamik des Befahrens der Trägerplatte 2 mit einem Reifen, welche die Auswertung erheblich erschwert, da sich beispielsweise durch solche Störungen der Anstieg eines Teillastsignals $TL_1$ bzw. $TL_2$ von Null zeitlich nicht zuverlässig genau bestimmen lässt, ebenso der Übergang der ansteigenden Flanke des Summen - Lastsignals L in den horizontalen Bereich, solange sich der Reifen vollständig auf der Waage 1 befindet.

Erfindungsgemäss kann nun die Geschwindigkeit des Reifens, das Gewicht und die Länge der Reifenaufstandsfläche wie folgt berechnet werden:
Der Reifen hat die Länge der Waage zurückgelegt, wenn er ausgehend von der Position II der Reifenauflagefläche die Position IV der Reifenauflagefläche erreicht hat. Diese Positionen sind vergleichsweise gut ermittelbar, da zum Einen in der Position II das Teillastsignal $TL_1$ ein Maximum aufweist, welches sich durch mathematische Algorithmen wesentlich schärfer erfassen lässt, als der blosse Übergang vom Anstieg auf einen horizontalen Ast (Lastsignal L) und zum Anderen in der Position IV das Teillastsignal $TL_2$ steil auf Null abfällt, so dass sich der Zeitpunkt, in welchem der Nullwert erreicht ist, wesentlich präzisere errechnen lässt als über das flach abfallende Teillastsignal $TL_1$.

Die Geschwindigkeit des Reifens ergibt sich deshalb erfindungsgemäss und bevorzugt aus der Division der Länge der Waage 1 durch die Zeit zwischen dem Maximum des Teillastsignals $TL_1$ und dem Erreichen des Nullwerts des Teillastsignals $TL_2$. Ebenso kann die Geschwindigkeit auch umgekehrt über die Zeit zwischen dem (steileren) Anstieg des Teillastsignals $TL_1$ und dem Maximum des Teillastsignals $TL_2$ berechnet

werden.

Es ergibt sich ein erfindungsgemässes Verfahren, wonach bevorzugt die Geschwindigkeit aus der Zeitdifferenz zwischen dem Maximum des ersten $TL_1$ und dem zeitlich nachfolgenden Minimum des zweiten Teillastsignals $TL_2$, oder dem ersten Minimum des ersten $TL_1$ und dem zeitlich nachfolgenden Maximum des zweiten Teillastsignals $TL_2$, in Verbindung mit der Länge l des zugehörigen Messabschnitts ermittelt wird.

Ist die Geschwindigkeit ermittelt, öffnet sich der Weg für die Berechnung der Last, indem zuerst die Teillastsignale $TL_1$ und $TL_2$ aufsummiert und dann gemittelt werden, beispielsweise wie oben erwähnt durch

$$\frac{\int_{t_1}^{t_2} f(t)dt}{v} = G_{Last}$$

wobei noch die Grenzen $t_1$ und $t_2$ festgelegt werden müssen. Hier bieten sich erfindungsgemäss die scharf abgrenzbaren Maxima der Teillastkurven $TL_1$ bzw. $TL_2$ an.

Bevorzugt werden für $t_1$ und $t_2$ jedoch für $t_1$ der Beginn des steiles Anstiegs des Teillastsignals $TL_1$ (Linie 52) und für $t_2$ das Ende des steilen Abfall des Teillastsignals $TL_2$ (Linie 55) verwendet. Dies hat den Vorteil, dass das Lastsignal L über längere, beispielsweise die doppelte Zeit gemittelt werden kann, als zwischen den Maxima der Teillastkurven $TL_1$ und $TL_1$ zur Verfügung steht: Wird, wie oben, beispielsweise eine Länge der Waage 1 von 30 cm und eine Länge der Reifenaufstandsfläche A bis C und I bis IV von 10 cm angenommen, beträgt die Länge zwischen den Maxima 20 cm (s. die Linien 53 und 54), die Länge zwischen dem Start- Nullwert des Teillastsignals $TL_1$, d.h. seinem ersten Minimum, und dem (steilen) Abfall zum zweiten, End- Nullwert, d.h. des zweiten Minimums des Teillastsignals $TL_2$ nämlich 40 cm (Linien 52 und 55).

An dieser Stelle sei angemerkt, dass sich beispielsweise aus der Zeitlichen Abfolge der Maxima der Teillastkurven die Fahrtrichtung ermitteln lässt, was bei richtungsgebundenen Messstrecken sinnvoll ist, um eine sich entgegen der vorgeschriebenen Richtung bewegende Last zu ermitteln wie dies bei Zahlstationen für Autobahnen oder anderen Einrichtungen wesentlich sein kann.

Es ergibt sich bevorzugt, dass die Mittelung des Lastsignals L über die Zeit t durch Integration des Signals L über die Zeit t und Division durch die Geschwindigkeit der Bewegung der Last erfolgt. Weiter ergibt sich besonders bevorzugt ein Verfahren bei welchem die Mittelung des Lastsignals bereits mit dem beginnenden Anstieg (Linie 52) des ersten Teillastsignals $TL_1$ startet und bevorzugt erst mit dem Erreichen des Nullwerts (Linie 55) des letzten Teillastsignals $TL_2$ endet. Schliesslich ist es erfindungsgemäss auch so, dass bevorzugt zwei Teillastsignale in ihrer Summe das Lastsignal ergeben, und wobei das erste und das zweite Teillastsignal an den jeweils gleichen zeitlichen Intervallgrenzen beginnen und enden und ihre Maxima im Intervall haben.

Zusammenfassend ergibt sich erfindungsgemäss ein Verfahren zur Berechnung des Gewichts einer sich über eine Waage bewegenden Last, wobei ein Lastsignal der Waage über eine Zeitspanne mit Hilfe der Geschwindigkeit der Last gemittelt wird, und wobei mehrere in ihrer Summe das Lastsignal ergebende Teillastsignale verwendet werden, wobei ein erstes Teillastsignal durch ein Maximum anzeigt, sobald sich die Last vollständig auf einem Messabschnitt der Waage befindet und ein zweites Teillastsignal durch einen Minimalwert anzeigt, sobald die Last vollständig vom Messabschnitt der Waage abgelaufen ist, oder ein erstes Teillastsignal ($TL_1$) durch seinen ersten Minimalwert, sobald die Last auf diesen aufzufahren beginnt und ein zweites Teillastsignal $TL2$ durch ein Maximum anzeigt, sobald die Last von diesem abzufahren beginnt, und dass aus diesen Teillastsignalen die Geschwindigkeit der Bewegung der Last ermittelt wird.

Die Länge der Auflagefläche lässt sich beispielsweise aus der Zeit zwischen dem Maximum der zweiten Teillastkurve $TL_2$ und deren nachfolgendem Nullwert multipliziert mit der ermittelten Geschwindigkeit ermitteln, oder umgekehrt und analog der Zeit für das Ansteigen der steilen Flanke des Teillastsignals $TL_1$.

Erfindungsgemäss ergibt sich ein Verfahren, wobei die Länge der Auflagefläche der Last auf einem Trägerelement der Waage durch die Zeit bestimmt wird, innert welcher ein Teillastsignal den Minimalwert aufweist, weil die Last die Waage gerade erreicht oder verlassen hat und dem Maximum des Teillastsignals, wo die Last sich soeben vollständig auf der Waage befindet oder gerade noch vollständig auf der Waage befindet, im Verhältnis zur Gesamtzeit, in welcher dieses Teillastsignal Lastwerte für diese Last erzeugt. Die Länge der Auflagefläche kann beispielsweise ein Indiz sein für fehlenden (oder übermässig hohen) Luftdruck des Reifens oder anderen Zwecken dienen.

Erfindungsgemäss ist weiter eine Anordnung von Waagen nach Anspruch 15, wobei deren Trägerelemente als Trägerplatten ausgebildet sind und mehrere Waagen in einem Fahrstreifen, mit den Trägerplatten Seite an Seite neben einander liegend, quer zu diesem angeordnet sind und eine zentrale Recheneinheit die Teillastsignale der Deformationssensoren der einzelnen Waagen auswertet und wenigstens einen der Werte für die Geschwindigkeit, das Gewicht oder die Fahrtrichtung einer über die Waagen rollenden Achse an einer Schnittstelle der Recheneinheit abrufbar bestimmt.

## Patentansprüche

1. Verfahren zur Berechnung des Gewichts einer sich über eine Waage (1) bewegenden Last, wobei ein Lastsignal der Waage (1) über eine Zeitspanne mit Hilfe der Geschwindigkeit der Last gemittelt wird, **dadurch gekennzeichnet, dass** zwei in ihrer Summe das Lastsignal ergebende Teillastsignale ($TL_1$, $TL_2$) verwendet werden, wobei ein erstes Teillastsignal ($TL_1$) durch ein Maximum anzeigt, sobald sich die Last vollständig auf einem Messabschnitt der Waage (1) befindet und ein zweites Teillastsignal ($TL_2$) durch einen Minimalwert anzeigt, sobald die Last vollständig vom Messabschnitt der Waage (1) abgelaufen ist, oder ein erstes Teillastsignal ($TL_1$) durch seinen ersten Minimalwert, sobald die Last auf diesen aufzufahren beginnt und ein zweites Teillastsignal $TL2$ durch ein Maximum anzeigt, sobald die Last von diesem abzufahren beginnt, und dass aus diesen Teillastsignalen ($TL_1$, $TL_2$) die Geschwindigkeit der Bewegung der Last ermittelt wird.

2. Verfahren nach Anspruch 1, wobei die Mittelung des Lastsignals (L) über die Zeit durch Integration des Signals (L) über die Zeit und Division durch die Geschwindigkeit der Bewegung der Last erfolgt.

3. Verfahren nach Anspruch 1, wobei die Mittelung des Lastsignals (L) bereits mit dem beginnenden Anstieg des ersten Teillastsignals ($TL_1$) startet und bevorzugt erst mit dem Erreichen des Nullwerts des zweiten Teillastsignals ($TL_2$) endet.

4. Verfahren nach Anspruch 1, wobei die Länge der Auflagefläche (A bis C und I bis IV) der Last auf einem Trägerelement der Waage (1) durch die Zeit bestimmt wird, innert welcher ein Teillastsignal ($TL_1$, $TL_2$) den Minimalwert aufweist, weil die Last die Waage (1) gerade erreicht oder verlassen hat und dem Maximum des Teillastsignals ($TL_1$, $TL_2$), wo die Last sich soeben vollständig auf der Waage (1) befindet oder gerade noch vollständig auf der Waage (1) befindet, im Verhältnis zur Gesamtzeit, in welcher dieses Teillastsignal ($TL_1$, $TL_2$) Lastwerte für diese Last erzeugt.

5. Verfahren nach Anspruch 1, wobei zwei Teillastsignale ($TL_1$, $TL_2$) in ihrer Summe das Lastsignal (L) ergeben, und wobei das erste und das zweite Teillastsignal ($TL_1$, $TL_2$) an der jeweils gleichen zeitlichen Intervallgrenzen beginnen und enden und ihre Maxima im Intervall haben.

6. Waage (1) zur Berechnung des Gewichts einer sich über eine Waage (1) bewegenden Last nach dem Verfahren nach Anspruch 1, mit einem Trägerelement und einer Wägeanordnung, **dadurch gekennzeichnet, dass** die Wägeanordnung (18) zwei Wägeeinheiten (10,11) und jede Wägeeinheit (10,11) ein Biegedeformationselement mit einem ein Lastsignal generierenden Deformationssensor (7,15 )aufweist, wobei die Wägeeinheiten (10,11) in Richtung der Bewegung der Last hintereinander angeordnet sind, das Trägerelement diese überspannt und zur Übertragung von Gewichtskraft mit seinem einen Ende auf das Deformationselement der ersten (10) und seinem anderen Ende auf das Deformationselement einer zweiten Wägeeinheit (11) wirkt.

7. Waage (1) nach Anspruch 6, wobei das Trägerelement als Trägerplatte (2) ausgebildet ist und das Biegedeformationselement einer Wägeeinheit (10,11) im Wesentlichen parallel zur Trägerplatte (2) verläuft, und an seinen in Richtung der Bewegung der Last gegenüberliegenden Enden am Untergrund (3) gelagert ist, und wobei die Einwirkung von Gewichtskraft zwischen Lagern, bevorzugt benachbart zu einem der Lager erfolgt, derart, dass sich das Biegedeformationselement unter der Einwirkung von Gewichtskraft durchbiegt.

8. Waage (1) nach Anspruch 6, wobei das Biegedeformationselement einen T - förmigen Umriss aufweist und die Einwirkung der Gewichtskraft linienförmig über eine Länge eines Querbalkens (5,13) erfolgt und der Deformationssensor (7,15) eine Durchbiegung des Deformationselements im Bereich eines Beins (6,14) detektiert.

9. Waage (1) nach Anspruch 6, wobei das Deformationselement am Untergrund über ein Festlager (24,27) am Ort der Einwirkung der Gewichtskraft und über ein Loslager (25,28) an seinem gegenüberliegenden Ende abgestützt ist, und wobei die Einwirkung der Gewichtskraft auf das Deformationselement über ein Pendellager (23,26) erfolgt.

10. Waage (1) nach Anspruch 6, wobei die erste (10) und die zweite Wägeeinheit (11) derart angeordnet sind, dass deren Deformationselemente an einander angrenzen.

11. Waage (1) nach Anspruch 8 und 10, wobei die Wägeeinheiten (10,11) gleich ausgebildet sind und deren Beine gegeneinander gerichtet sind.

12. Waage (1) nach Anspruch 6, wobei die Deformationssensoren der Wägeeinheiten (10,11) als Schwingsaitensensoren ausgebildet sind.

13. Waage (1) nach Anspruch 6, wobei deren Länge in Richtung der Bewegung der Last weniger als 50 cm, bevorzugt 30 cm beträgt.

14. Waage (1) nach Anspruch 6, wobei deren Breit weniger als 100 cm, bevorzugt 60 cm beträgt.

15. Anordnung von Waagen (1) nach Anspruch 6, wobei deren Trägerelemente als Trägerplatten (2) ausgebildet sind und mehrere Waagen (1) in einem Fahrstreifen, mit den Trägerplatten (2) Seite an Seite neben einander liegend, quer zu diesem angeordnet sind und eine zentrale Recheneinheit die Teillastsignale der Deformationssensoren der einzelnen Waagen auswertet und wenigstens einen der Werte für die Geschwindigkeit, das Gewicht oder die Fahrtrichtung einer über die Waagen rollenden Achse an einer Schnittstelle der Recheneinheit abrufbar bestimmt.

**Claims**

1. Method for calculating the weight of a load moving over a scale (1), a load signal of the scale (1) being averaged over a period of time with the aid of the speed of the load, **characterized in that** two partial load signals ($TL_1$, $TL_2$) are used, wherein a first partial load signal ($TL_1$) indicates by a maximum as soon as the load is completely on a measuring section of the scale (1) and a second partial load signal ($TL_2$) indicates by a minimum value, as soon as the load has completely left the measuring section of the scale (1), or a first partial load signal ($TL_1$) indicates by its first minimum value as soon as the load begins to move onto it and a second partial load signal TL2 indicates by a maximum as soon as the load begins to move away from it, and that the speed of movement of the load is determined from these partial load signals ($TL_1$, $TL_2$).

2. the method according to claim 1, wherein the averaging of the load signal (L) over time is performed by integrating the signal (L) over time and dividing by the speed of movement of the load.

3. method according to claim 1, wherein the averaging of the load signal (L) already starts with the beginning increase of the first partial load signal ($TL_1$) and preferably only ends when the zero value of the second partial load signal ($TL_2$) is reached.

4. The method according to claim 1, wherein the length of the bearing surface (A to C and I to IV) of the load on a carrier element of the scale (1) is determined by the time during which a partial load signal ($TL_1$, $TL_2$) has the minimum value because the load has just reached or left the scale (1) and the maximum of the partial load signal ($TL_1$, $TL_2$), where the load is just completely on the scale (1) or is just still completely on the scale (1), in relation to the total time in which this partial load signal ($TL_1$, $TL_2$) generates load values for this load.

5. method according to claim 1, wherein two partial load signals ($TL_1$, $TL_2$) in their sum result in the load signal (L), and wherein the first and the second partial load signal ($TL_1$, $TL_2$) begin and end at the same time interval limits in each case and have their maxima in the interval.

6. Scale (1) for calculating the weight of a load moving over a scale (1) according to the method according to claim 1, with a carrier element and a weighing arrangement, **characterized in that** the weighing arrangement (18) has two weighing units (10, 11) and each weighing unit (10, 11) has a bending deformation element with a deformation sensor (7,15), the weighing units (10, 11) being arranged one behind the other in the direction of movement of the load, the carrier element spanning them and acting with its one end on the deformation element of the first weighing unit (10) and its other end on the deformation element of a second weighing unit (11) in order to transmit weight force.

7. Scale (1) according to claim 6, wherein the carrier element is designed as a carrier plate (2) and the bending deformation element of a weighing unit (10, 11) extends substantially parallel to the carrier plate (2) and is mounted on the base (3) at its ends opposite in the direction of movement of the load, and wherein the action of weight force takes place between bearings, preferably adjacent to one of the bearings, in such a way that the bending deformation element deflects under the action of weight force.

8. Scale (1) according to claim 6, wherein the bending deformation element has a T-shaped contour and the effect of the weight force is linear over a length of a transverse beam (5, 13) and the deformation sensor (7, 15) detects a deflection of the deformation element in the region of a leg (6, 14).

9. Scale (1) according to claim 6, wherein the deformation element is supported on the base via a fixed bearing (24, 27) at the location of the action of the weight force and via a floating bearing (25, 28) at its opposite end, and wherein the action of the weight force on the deformation element is effected via a self-aligning bearing (23, 26).

10. Scale (1) according to claim 6, wherein the first (10) and the second weighing unit (11) are arranged in such a way that their deformation elements are adjacent to each other.

11. Scale (1) according to claims 8 and 10, wherein the weighing units (10, 11) are of the same design and their legs are directed towards each other.

12. Scale (1) according to claim 6, wherein the deformation sensors of the weighing units (10, 11) are designed as vibrating wire sensors.

13. Scale (1) according to claim 6, wherein its length in the direction of movement of the load is less than 50 cm, preferably 30 cm.

14. Scale (1) according to claim 6, wherein the width thereof is less than 100 cm, preferably 60 cm.

15. arrangement of scales (1) according to claim 6, wherein their carrier elements are designed as carrier plates (2) and a plurality of scales (1) are arranged in a lane, with the carrier plates (2) lying side by side, transversely thereto, and a central computing unit evaluates the partial load signals of the deformation sensors of the individual scales and determines at least one of the values for the speed, the weight or the direction of travel of an axle rolling over the scales in a retrievable manner at an interface of the computing unit.

**Revendications**

1. Procédé de calcul du poids d'une charge se déplaçant sur une balance (1), un signal de charge de la balance (1) étant moyenné sur une période de temps à l'aide de la vitesse de la charge, **caractérisé en ce que** deux signaux de charge partiels (TL$_1$, TL$_2$) sont utilisés, un premier signal de charge partielle (TL$_1$) étant indiqué par un maximum dès que la charge se trouve entièrement sur une section de mesure de la balance (1) et un deuxième signal de charge partielle (TL$_2$) étant indiqué par une valeur minimale, dès que la charge est entièrement sortie de la section de mesure de la balance (1), ou un premier signal de charge partielle (TL$_1$) par sa première valeur minimale dès que la charge commence à monter sur celle-ci et un deuxième signal de charge partielle TL2 par un maximum dès que la charge commence à en descendre, et **en ce que** la vitesse du mouvement de la charge est déterminée à partir de ces signaux de charge partielle (TL$_1$, TL$_2$).

2. procédé selon la revendication 1, dans lequel la moyenne du signal de charge (L) en fonction du temps est obtenue par intégration du signal (L) en fonction du temps et division par la vitesse de déplacement de la charge.

3. procédé selon la revendication 1, dans lequel le calcul de la moyenne du signal de charge (L) commence déjà avec le début de la montée du premier signal de charge partiel (TL$_1$) et se termine de préférence seulement lorsque la valeur zéro du deuxième signal de charge partiel (TL$_2$) est atteinte.

4. Procédé selon la revendication 1, dans lequel la longueur de la surface d'appui (A à C et I à IV) de la charge sur un élément porteur de la balance (1) est déterminée par le temps pendant lequel un signal de charge partielle (TL$_1$, TL$_2$) présente la valeur minimale parce que la charge vient d'atteindre ou de quitter la balance (1) et le maximum du signal de

charge partielle ($TL_1$, $TL_2$), où la charge vient de se trouver entièrement sur la balance (1) ou vient encore de se trouver entièrement sur la balance (1), par rapport au temps total pendant lequel ce signal de charge partielle ($TL_1$, $TL_2$) produit des valeurs de charge pour cette charge.

5. Procédé selon la revendication 1, dans lequel deux signaux de charge partiels ($TL_1$, $TL_2$) donnent dans leur somme le signal de charge (L), et dans lequel le premier et le deuxième signal de charge partiel ($TL_1$, $TL_2$) commencent et se terminent respectivement aux mêmes limites temporelles d'intervalle et ont leurs maxima dans l'intervalle.

6. Balance (1) pour calculer le poids d'une charge se déplaçant sur une balance (1) selon le procédé de la revendication 1, avec un élément porteur et un agencement de pesage, **caractérisée en ce que** l'agencement de pesage (18) comprend deux unités de pesage (10, 11) et chaque unité de pesage (10, 11) comprend un élément de déformation en flexion avec un capteur de déformation (7, 11) générant un signal de charge,15 ), les unités de pesage (10, 11) étant disposées l'une derrière l'autre dans la direction du mouvement de la charge, l'élément de support les enjambant et agissant, pour la transmission du poids, par une de ses extrémités sur l'élément de déformation de la première (10) et par son autre extrémité sur l'élément de déformation d'une deuxième unité de pesage (11).

7. Balance (1) selon la revendication 6, dans laquelle l'élément de support est réalisé sous la forme d'une plaque de support (2) et l'élément de déformation en flexion d'une unité de pesage (10, 11) s'étend sensiblement parallèlement à la plaque de support (2), et est monté sur le support (3) au niveau de ses extrémités opposées dans la direction du déplacement de la charge, et dans laquelle l'action de la force de poids s'effectue entre des paliers, de préférence au voisinage de l'un des paliers, de telle sorte que l'élément de déformation en flexion fléchit sous l'action de la force de poids.

8. Balance (1) selon la revendication 6, dans laquelle l'élément de déformation par flexion présente un contour en forme de T et l'action du poids s'effectue de manière linéaire sur une longueur d'une traverse (5, 13) et le capteur de déformation (7, 15) détecte une flexion de l'élément de déformation dans la zone d'un pied (6, 14).

9. Balance (1) selon la revendication 6, dans laquelle l'élément de déformation s'appuie sur le support par l'intermédiaire d'un palier fixe (24, 27) à l'endroit où la force de poids agit et par l'intermédiaire d'un palier libre (25, 28) à son extrémité opposée, et dans laquelle l'action de la force de poids sur l'élément de déformation s'effectue par l'intermédiaire d'un palier pendulaire (23, 26).

10. Balance (1) selon la revendication 6, dans laquelle la première (10) et la deuxième unité de pesage (11) sont disposées de telle sorte que leurs éléments de déformation sont contigus.

11. Balance (1) selon les revendications 8 et 10, dans laquelle les unités de pesage (10, 11) sont identiques et leurs pieds sont orientés l'un vers l'autre.

12. Balance (1) selon la revendication 6, dans laquelle les capteurs de déformation des unités de pesage (10, 11) sont des capteurs à corde vibrante.

13. Balance (1) selon la revendication 6, dont la longueur dans la direction de déplacement de la charge est inférieure à 50 cm, de préférence 30 cm.

14. Balance (1) selon la revendication 6, dont la largeur est inférieure à 100 cm, de préférence 60 cm.

15. Agencement de balances (1) selon la revendication 6, dans lequel leurs éléments de support sont réalisés sous forme de plaques de support (2) et plusieurs balances (1) sont disposées dans une voie de circulation, les plaques de support (2) étant placées côte à côte les unes à côté des autres, transversalement à celle-ci, et une unité de calcul centrale évalue les signaux de charge partielle des capteurs de déformation des différentes balances et détermine au moins l'une des valeurs pour la vitesse, le poids ou la direction de déplacement d'un essieu roulant sur les balances, de manière à pouvoir être appelée sur une interface de l'unité de calcul.

Fig. 1

Fig. 2

Fig 3

Fig 4a

Fig 4b

Fig 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013063710 A1
- WO 0122044 A1
- US 5998741 A
- US 5338901 A